# EUROPEAN PATENT APPLICATION

(11) **EP 1 534 042 A1**
(43) Date of publication of application: **25.05.2005**
(21) Application number: 04256862.6
(22) Date of filing: 05.11.2004
(51) Int. Cl.: H04Q 7/38

(54) **Method for global authentication with continuity during handoff to a neighboring mobile switching center**

(30) Priority: 20.11.2003 US 719233
(71) Applicant: LUCENT TECHNOLOGIES INC., Murray Hill, New Jersey 07974-0636 (US)
(72) Inventor: Dumser, Shawn K., Elgin, Illinois (US); McCormick, Mark A., Naperville, Illinois (US)
(74) Representative: Watts, Christopher Malcolm Kelway, Dr.

(57) **Abstract**

The global authentication continuity feature uses a new ANSI-41 message, the AUTHENTICATION GLOBAL DATA message, to convey global authentication information to the Mobile Switching Center that has just become the serving Mobile Switching Center due to a handoff. This provides continuity of the global authentication process, even though the mobile subscriber wireless communication device hands-off to another Mobile Switching Center. The information that is passed forward from the Visited Location Register of the previous serving Mobile Switching Center to the new serving Mobile Switching Center could be RANDShared Secret Data to perform a Shared Secret Data update, RANDU/AUTH to perform an Unique Challenge, Voice P rivacy Masks, and Signal Encryption Keys.

## Description

### Field of the Invention

This invention relates to cellular communications networks and, in particular, to a feature operable therein to implement global authentication as the mobile subscriber wireless communication device is handed off between Mobile Switching Centers.

### Problem

It is a problem in the field of cellular communications networks to implement global authentication as the mobile subscriber wireless communication device is handed off between Mobile Switching Centers. This is especially a problem when the Mobile Switching Centers encounter a border condition between Mobile Switching Centers.

Existing cellular communication systems have the ability to perform Global Authentication via the ANSI-41 standards between two Mobile Switching Centers. The mobile subscriber wireless communication device is programmed with the CAVE algorithm and data, such as the Authentication Key. This information, along with other data as described in TBS51 of the ANSI-41 standards, provides details on how this information is used. The Home Authentication Center (AC) communicates with the Home Location Register (HLR) of the mobile subscriber to create a Shared Secret Data, which is divided into two parts: Shared Secret Data-A and Shared Secret Data-B. The Home Authentication Center also communicates with the mobile subscriber wireless communication device using the Shared Secret Data.

The Home Authentication Center then uses different message sets to have the mobile subscriber wireless communication device perform calculations to create a Shared Secret Data and/or other activities such as Unique Challenge. These activities can be directed to the mobile subscriber wireless communication device through three message sets: 1.) Authentication Directive Invoke; 2.) Authentication Request Return Result; and 3) Authentication Failure Report Return Result. The Authentication Request and Authentication Failure Report messages are determined and created while executing the Global Authentication function. Global Authentication entails the serving Mobile Switching Center requiring the mobile subscriber wireless communication device, through information contained in the Overhead Message Train, to execute the CAVE Algorithm each time the mobile subscriber wireless communication device accesses a Mobile Switching Center. The Overhead Message Train that is transmitted has the authentication bit set and a random number is broadcast by the serving Mobile Switching Center. The mobile subscriber wireless communication device uses this information along with the Shared Secret Data stored in the mobile subscriber wireless communication device, the Mobile Identification Number, and the Electronic Serial Number, also the Last 6 d igits that make up the dialed digits for a call origination by the mobile subscriber wireless communication device, to create an authentication result. The authentication result is an 18-bit result of the CAVE algorithm and is sent with the upper 8 bits of the Random Number being used in the CAVE algorithm (RANDC), and the call history count that is stored in the mobile subscriber wireless communication device. The serving Mobile Switching Center then creates an Authentication Result using the same information, but instead of the Shared Secret Data in the mobile subscriber wireless communication device, uses the Shared Secret Data that is stored in the Home Authentication Center or has been sent to a visited Mobile Switching Center. These two values of the Shared Secret Data are compared to determine the type of service, if any, to apply to the mobile subscriber wireless communication devices and potential other activities that may be require of the mobile subscriber wireless communication device.

One of these activities is Shared Secret Data updates, that is, to modify the Shared Secret Data in the mobile subscriber wireless communication device and Home Authentication Center to avoid potential cloners from detecting the value that is being used by this mobile subscriber wireless communication device. Another activity is a Unique Challenge, which allows the Home Authentication Center to further determine that the mobile subscriber wireless communication device is truly the mobile subscriber wireless communication device it believes is accessing the serving Mobile Switching Center. A problem arises when a mobile subscriber wireless communication device hands-off to another Mobile Switching Center. The information sent by the Home Authentication Center in the Authentication Request Return Result or the Authentication Failure Report Return Result is not forwarded after a hand-off to the new serving Mobile Switching Center to send to the mobile subscriber wireless communication device. Thus, a potential condition arises for fraudulent use. This problem is most serious in a highly congested cellular communication network where there are many border cells. In this environment, when the call handling capacity of a base station subsystem is reached, an additional base station subsystem is added to the Mobile Switching Center to provide the necessary call handling capacity. However, when the call handling capacity of a Mobile Switching Center is reached, the coverage area of the Mobile Switching Center is reduced and a new Mobile Switching Center is installed, thereby creating more border cells. With the increased subscriber population and longer holding times on calls due to new media-based applications, this problem is becoming more prevalent.

To alleviate this problem, the ANSI-41 standards for Authentication Messages must be changed to allow for Mobile Switching Centers from different vendors to perform these global authentication activities without creating a larger window of opportunity for fraudulent or clone users.

### Solution

The above described problems are solved and an advance achieved by the present global authentication continuity feature which uses a new ANSI-41 message, the AUTHENTICATION GLOBAL DATA message, to convey global authentication information to the Mobile Switching Center that has just become the serving Mobile Switching Center due to a handoff. This provides continuity of the global authentication process, even though the mobile subscriber wireless communication device hands-off to another Mobile Switching Center. The information that is passed forward from the Visited Location Register of the previous serving Mobile Switching Center to the new serving Mobile Switching Center could be RANDShared Secret Data to perform a Shared Secret Data update, RANDU/AUTH to perform a Unique Challenge, Voice Privacy Masks, and Signal Encryption Keys.

An example of the need for the global authentication continuity feature is in the application of Voice Privacy on an incoming call connection where the mobile subscriber has subscribed for the Voice Privacy feature. Voice Privacy is a 66-byte mask that is applied at the mobile subscriber wireless communication device to the voice signaling that is generated to prevent unauthorized access to the voice signaling. The 66-byte mask is then applied again at the Mobile Switching Center to remove the encryption on the voice signaling. When an incoming call arrives at a first Mobile Switching Center and is to be delivered to the mobile subscriber wireless communication device, the mobile subscriber wireless communication device is required to execute an authentication process to ensure its authenticity. The mobile subscriber wireless communication device is paged by the first Mobile Switching Center and a page response is received by the Mobile Switching Center from the mobile subscriber wireless communication device. The first Mobile Switching Center assigns the mobile subscriber wireless communication device to a traffic channel and generates an alert, ringing the mobile subscriber wireless communication device. The first Mobile Switching Center also transmits the Authentication Request Invoke message to the Home Location Register & Home Authentication Center of the mobile subscriber wireless communication device. In response to the incoming call alert, the mobile subscriber presses the send key and answers the mobile subscriber wireless communication device. In the case where a handoff is immediately done to a second Mobile Switching Center MSC-B, there is a loss of continuity in the global authentication process. The Authentication Request Return Result is received at the first Mobile Switching Center and includes the RANDShared Secret Data to have the mobile subscriber wireless communication device do a change to the Shared Secret Data stored in the mobile subscriber wireless communication device. Since the mobile subscriber wireless communication device has handed off to another Mobile Switching Center, there is no mechanism for the first Mobile Switching Center to forward this information during global authentication to the second Mobile Switching Center. W ith the global authentication continuity feature, the first Mobile Switching Center detects a handoff has occurred and that the information can be received at the second Mobile Switching Center. The first Mobile Switching Center carries AUHENTICATION GLOBAL DATA ANSI-41 messages with the voice privacy masks encoded and sends the message to the second Mobile Switching Center. The second Mobile Switching Center then applies the voice privacy masks and informs the mobile subscriber wireless communication device that voice privacy is now active. Upon successful application of the voice privacy mask, the second Mobile Switching Center transmits a successful execution of the process acknowledgement to the first Mobile Switching Center. If there was an unsuccessful application of the voice privacy mask, the second Mobile Switching Center would send an unsuccessful indication via a return result to the first Mobile Switching Center.

### Brief Description of the Drawing

Figure 1 illustrates in block diagram form the configuration of a typical cellular communication network that has a border service are between multiple adjacent Mobile Switching Centers;
Figure 2 illustrates in flow diagram form the operation of the present global authentication continuity feature in response to an access from the mobile subscriber wireless communication devices; and
Figures 3 & 4 illustrate in flow diagram form, the operation of the present global authentication continuity feature in performing a global authentication process.

### Detailed Description

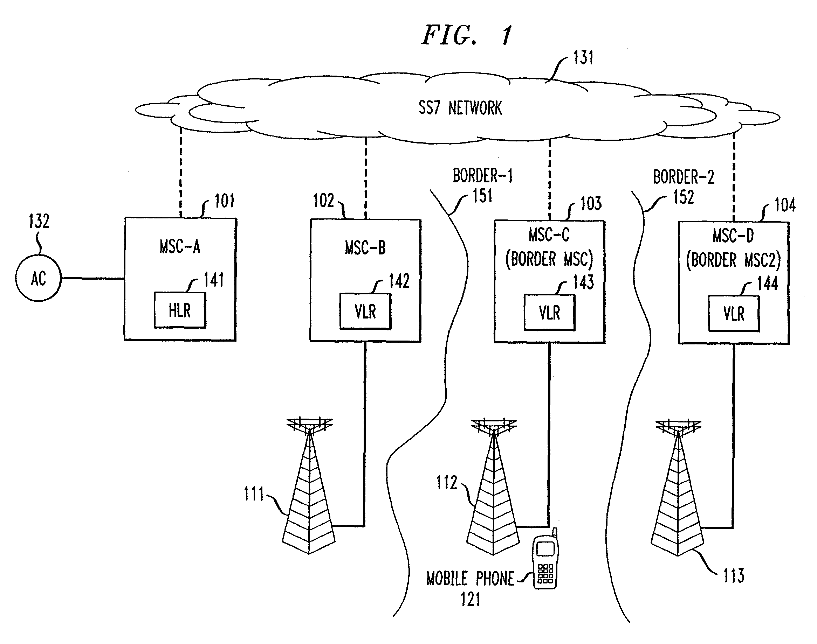

Figure 1 illustrates in block diagram form the configuration of a typical cellular communication network that has a border service are between multiple adjacent Mobile Switching Centers. A cellular communication network 100 consists of a plurality of Mobile Switching Centers 101-104, each of which serves one or more base station subsystems (such as 111, 112, 113) that provide the radio frequency links to the plurality of mobile subscriber wireless communication devices 121 that are operational in each call coverage area (termed cell) (not shown) provided by the associated base station subsystem. One Mobile Switching Center 101 is typically termed the subscribers home Mobile Switching Center and it maintains the subscriber's identification, authentication and call services definition data in an associated Home Location Register 141. Other Mobile Switching Centers 102, 103, 104 maintain their own Home Location Registers (not shown) and Visited Location Registers 142, 143, 144 to store call authorization data for subscribers who roam out of their home service area to the call coverage area of the visited Mobile Switching Centers 102, 103, 104. Alternatively, the Home Location Register could be a Standalone Home Location Register SHLR thus not part of a Mobile Switching Center.

In the case of a border service area, this is the a rea w here the service from a first Mobile Switching Center overlaps the service provided by a second Mobile Switching Center, as indicated in Figure 1 by lines 151, 152. This situation occurs because the cell site radio frequency signals transmitted by the various base station subsystems served by the Mobile Switching Centers are not precisely bounded and to provide continuity of service to the mobile subscribers, the radio frequency signals from one base station subsystem must overlap with the radio frequency signals from an adjacent base station subsystem. Therefore, the mobile subscribers' wireless communication devices are designed to select the base station subsystem producing the strongest signal to ensure reliable communications as the subscriber roams among multiple cell sites.

### Global Authentication Continuity - Mobile Subscriber Request

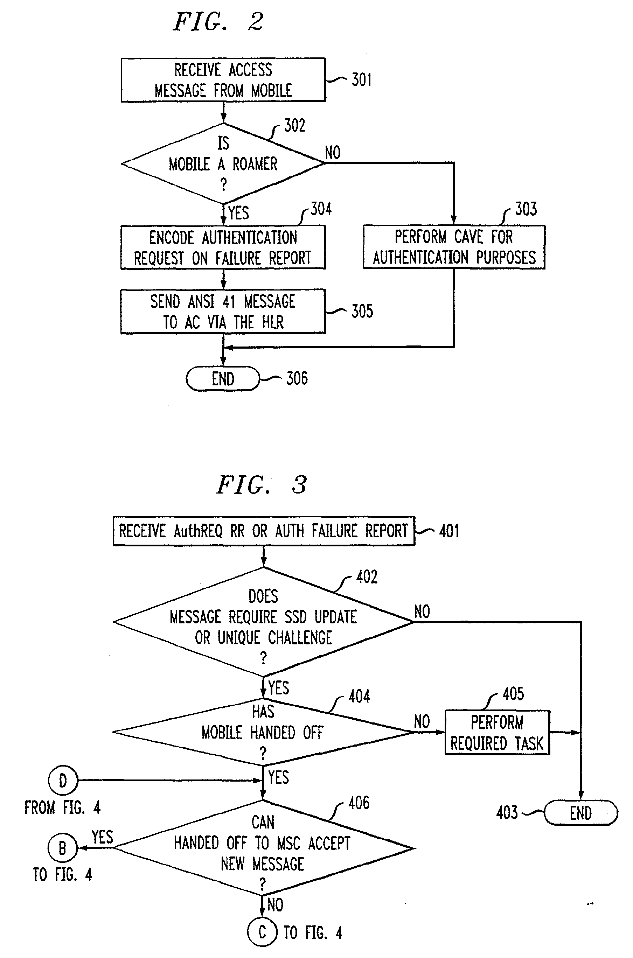

Figure 2 illustrates in flow diagram form the operation of the present global authentication continuity feature in the response to an access from the mobile subscriber wireless communication devices. At step 301, the serving Mobile Switching Center 102 receives an access message from the mobile subscriber wireless communication device 121 and determines at step 302 whether this mobile subscriber wireless communication device 121 is a roaming mobile subscriber wireless communication device. If not, the serving Mobile Switching Center 102 performs a CAVE process for authentication purposes and processing exits at step 306. If the mobile subscriber wireless communication device 121 is a roaming mobile subscriber wireless communication device, the serving Mobile Switching Center 102 encodes either an Authentication Request or an Authentication Failure Report at step 304 and at step 305 transmits an ANSI-41 message to Home Authentication Center 132 via the Home Location Register 141.

### Global Authentication Continuity Process

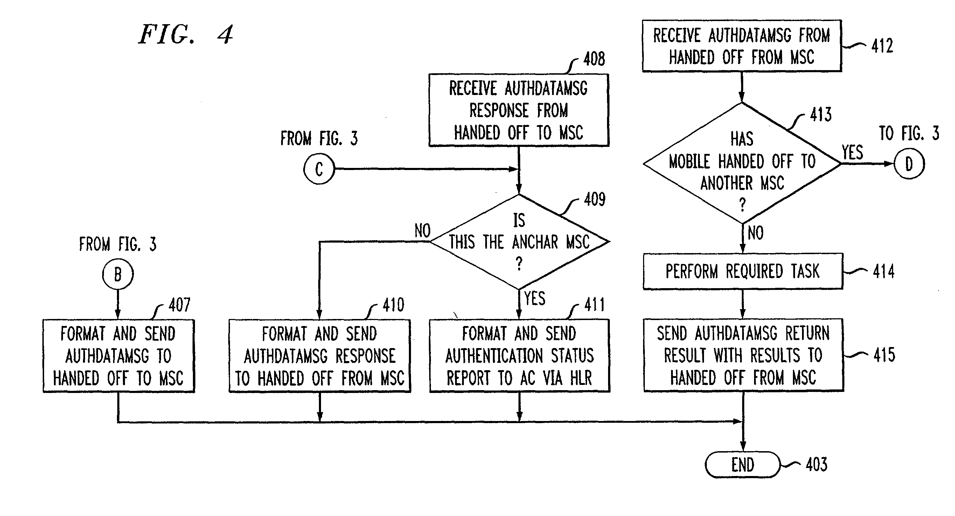

Figures 3 & 4 illustrate in flow diagram form, the operation of the present global authentication continuity feature in performing a global authentication process for a mobile subscriber wireless communication device. At step 401, the serving Mobile Switching Center 102 receives an Authentication Request Return Result or an Authentication Failure Report Return Result from the mobile subscriber wireless communication device 121 and at step 402 determines whether this received message requires an update of the Shared Secret Data or the generation of a Unique Challenge. If not, processing ends at step 403.

If one of these actions is required, then processing advances to step 404 where the serving Mobile Switching Center 102 determines whether the mobile subscriber wireless communication device 121 has handed off to another Mobile Switching Center 103. If not, the requested task is performed in conventional manner at step 405 and processing exits at step 403. If the mobile subscriber wireless communication device 121 has handed off to another Mobile Switching Center 103, then the serving Mobile Switching Center 1 02 determines at step 406 whether the other Mobile Switching Center 103 can accept the AUTHENTICATION GLOBAL DATA message. If not, processing advances to step 409 where the serving Mobile Switching Center 102 further determines whether the mobile subscriber wireless communication device 121 has handed off to t he anchor Mobile Switching Center 103. The anchor Mobile Switching Center is the first Mobile Switching Center in a string of handoffs and represents the Mobile Switching Center where this call connection to the mobile subscriber wireless communication device 121 originated. If not, processing advances to step 410 where the Home Authentication Center 132 formats and transmits an Authentication Data Message Response to the Mobile Switching Center 102 last serving the mobile subscriber wireless communication device121 and processing then exits at step 403. If the mobile subscriber wireless communication device 121 has handed off to the anchor Mobile Switching Center 103, at step 411 the serving Mobile Switching Center 102 formats and transmits an Authentication Status Report to Home Authentication Center 132 via the Home Location Register 141.

If at step 406 the serving Mobile Switching Center 102 that the other Mobile Switching Center 103 can accept the AUTHENTICATION GLOBAL DATA message, then at step 407 the serving Mobile Switching Center 102 formats and transmits an Authentication Data Message to the other Mobile Switching Center 103 and processing exits at step 403.

Other steps in this process include the instance where the serving Mobile Switching Center 102 receives an Authentication Data Message from the other Mobile Switching Center 103, at which time processing advances to step 409 as described above.

Alternatively, the serving Mobile Switching Center 102 receives an Authentication Data Message from the handed off from Mobile Switching Center 101, at which time processing advances to step 413 where the serving Mobile Switching Center 102 determines whether the mobile subscriber wireless communication device 121 has handed off to another Mobile Switching Center 103. If so, processing advances to step 406 as described above. If not, processing advances to step 414 where the serving Mobile Switching Center 102 performs the requested task and at step 4 15 transmits an Authentication Data Message with results to the handed off from Mobile Switching Center 101 and processing exits at step 403.

### Summary

The global authentication feature which uses a new ANSI-41 message, the AUTHENTICATION GLOBAL DATA message, to convey global authentication information to the Mobile Switching Center that has just become the serving Mobile Switching Center due to a handoff. This provides continuity of the global authentication process, even though the mobile subscriber wireless communication device hands-off to another Mobile Switching Center.

## Claims

1. A global authentication continuity feature, operable in a cellular communication network, for p roviding continuity of the global authentication process executing in a serving Mobile Switching Center for a subscriber, who uses a mobile subscriber wireless communication device which has handed off to another Mobile Switching Center during the execution of the global authentication process, comprising:
Mobile Switching Center message identification means, responsive to the receipt of a service request message in the serving Mobile Switching Center from said mobile subscriber wireless communication device, for determining whether said service request message requires initiation of an authentication process; and
handoff determination means, responsive to a determination that said service request message requires initiation of an authentication process, for determining whether the mobile subscriber wireless communication device has handed off to another Mobile Switching Center; and
global authentication message forwarding means located in said serving Mobile Switching Center for transmitting a global authentication continuity message to the other Mobile Switching Center to maintain continuity of the authentication process.

2. The global authentication continuity feature of claim 1 further comprising:
message compatibility means located in said serving Mobile Switching Center for determining whether the other Mobile Switching Center can accept said global authentication continuity message.

3. The global authentication continuity feature of claim 2 further comprising:
message formatting means, responsive to a determination that said other Mobile Switching Center can accept said global authentication continuity message, for generating said global authentication continuity message for transmission to the other Mobile Switching Center.

4. The global authentication continuity feature of claim 2 further comprising:
message formatting means, responsive to a determination that said other Mobile Switching Center can not accept said global authentication continuity message, for terminating processing of said global authentication continuity message.

5. The global authentication continuity feature of claim 4 further comprising:
Home Authentication Center means, responsive to a determination that said other Mobile Switching Center can not accept said global authentication continuity message, for transmitting an Authentication Data Message Response to the Mobile Switching Center last serving said mobile subscriber wireless communication device.

6. A method of executing a global authentication continuity feature, operable in a cellular communication network, for providing continuity of the global authentication process executing in a serving Mobile Switching Center for a subscriber, who uses a mobile subscriber wireless communication device which has handed off to another Mobile Switching Center during the execution of the global authentication process, comprising:
determining, in response to the receipt of a service request message in the serving Mobile Switching Center from said mobile subscriber wireless communication device, whether said service request message requires initiation of an authentication process; and
determining, in response to a determination that said service request message requires initiation of an authentication process, whether the mobile subscriber wireless communication device has handed off to another Mobile Switching Center; and
transmitting a global authentication continuity message to the other Mobile Switching Center to maintain continuity of the authentication process.

7. The method of executing a global authentication continuity feature of claim 6 further comprising:
determining whether the other Mobile Switching Center can accept said global authentication continuity message.

8. The method of executing a global authentication continuity feature of claim 7 further comprising:
generating, in response to a determination that said other Mobile Switching C enter c an accept s aid g lobal a uthentication c ontinuity m essage, said global authentication continuity message for transmission to the other Mobile Switching Center.

9. The method of executing a global authentication continuity feature of claim 7 further comprising:
terminating, in response to a determination that said other Mobile Switching Center can not accept said global authentication continuity message, processing of said global authentication continuity message.

10. The method of executing a global authentication continuity feature of claim 9 further comprising:
transmitting, in response to a determination that said other Mobile Switching Center can not accept said global authentication continuity message, an Authentication Data Message Response to the Mobile Switching Center last serving said mobile subscriber wireless communication device.
